(19) Europäisches Patentamt
European Patent Office
Office européen des brevets

(11) EP 1 607 450 A1

(12) **EUROPEAN PATENT APPLICATION**
published in accordance with Art. 158(3) EPC

(43) Date of publication:
**21.12.2005 Bulletin 2005/51**

(21) Application number: **04721002.6**

(22) Date of filing: **16.03.2004**

(51) Int Cl.7: **C09D 5/03**, C09D 133/00, C09D 163/00, C09D 167/00, C09D 175/04, C09D 201/00

(86) International application number:
**PCT/JP2004/003469**

(87) International publication number:
**WO 2004/083320 (30.09.2004 Gazette 2004/40)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **17.03.2003 JP 2003071169**

(71) Applicant: **Nippon Paint Co., Ltd.**
**Osaka-shi, Osaka 531-8511 (JP)**

(72) Inventors:
- **ASAMI, Yuji c/o Nippon Paint Co.,Ltd.**
  **Neyagawa-shi, Osaka 572-8501 (JP)**
- **ASAI, Tomohito c/o Nippon Paint Co.,Ltd.**
  **Neyagawa-shi, Osaka 572-8501 (JP)**
- **IGA, Nobuo c/o Nippon Paint Co.,Ltd.**
  **Neyagawa-shi, Osaka 572-8501 (JP)**

(74) Representative: **Vossius & Partner**
**Siebertstrasse 3**
**81675 München (DE)**

(54) **MATTE POWDER COATING COMPOSITION**

(57) The present invention relates to a matte powder coating composition comprising a powder coating (A) comprising a resin, a curing agent and a colorant, and a powder coating (B) comprising a resin and a curing agent without containing a colorant, wherein the powder coating (B) has a gelation time of 1200 seconds or less, and the difference in the gelation time of the powder coating (B) and the powder coating (A) is 400 seconds or more; a process for preparing the same; and a method for forming a matte coating film using the powder coating composition.



Printed by Jouve, 75001 PARIS (FR)

## Description

### TECHNICAL FIELD

The present invention relates to a matte powder coating composition from which a matte coating film is obtained, a process for preparing the same and a method for forming a matte coating film using the powder coating composition.

### BACKGROUND ART

The matte powder coating composition of the present invention has been widely used for coating of steel furniture, electrical appliances, automobile parts and the like. In recent years, however, demands for matte coating films have been increasing from the viewpoint of obtaining a high-quality appearance.

Conventionally, as a means of forming a matte coating film, a technique of electrostatic powder coating comprising dry-blending a thermosetting polyester powder coating in which a blocked isocyanate is used as a curing agent with a thermosetting acrylic powder coating having a glycidyl group has been known (see Japanese Patent Laid-Open No. Sho 54-36339). However, two kinds of powder coatings for every color to be required must be furnished, so that a large number of powder coatings would be necessary.

In addition, a technique of obtaining a matte powder coating comprising melt-kneading two kinds of polyester resins having different hydroxyl values with a blocked isocyanate-based curing agent (see Japanese Patent Laid-Open No. Sho 64-1770); a matte powder coating composition comprising a polyester resin containing an acidic group and a hydroxyl group, an acrylic resin containing a glycidyl group, a compound containing a carboxyl group and a curing catalyst (see Japanese Patent Laid-Open No. 2002-212499); and the like have been known. Even in these processes, powder coatings must be prepared for every color and gloss to be required, so that a large number of powder coatings would be necessary.

### DISCLOSURE OF INVENTION

An object of the present invention is to provide a matte powder coating composition from which a matte coating film having a wide range of colors with a smaller number of powder coatings can be obtained and a process for preparing the same, and a method for forming a matte coating film using the powder coating composition.

The present invention relates to:

(1) a matte powder coating composition comprising a powder coating (A) comprising a resin, a curing agent and a colorant, and a powder coating (B) comprising a resin and a curing agent without containing a colorant, wherein the powder coating (B) has a gelation time of 1200 seconds or less, and the difference in the gelation time of the powder coating (B) and the powder coating (A) is 400 seconds or more;

(2) a process for preparing a matte powder coating composition comprising the step of mixing a powder coating (A) comprising a resin, a curing agent and a colorant, and a powder coating (B) comprising a resin and a curing agent without containing a colorant, wherein the powder coating (B) has a gelation time of 1200 seconds or less, and the difference in the gelation time of the powder coating (B) and the powder coating (A) is 400 seconds or more; and

(3) a method for forming a matte coating film characterized by applying the powder coating composition.

### BEST MODE FOR CARRYING OUT THE INVENTION

A feature of the matte powder coating composition of the present invention resides in that the powder coating composition comprises a powder coating without containing a colorant (powder coating (B)), the powder coating having a specified gelation time in addition to a colored powder coating containing a colorant (powder coating (A)). A matte coating film can be efficiently obtained by using the powder coating (B) having a shorter gelation time and a large difference in the gelation time with the powder coating (A). Specifically, the powder coating (B) has a gelation time of 1200 seconds or less, and preferably 1000 seconds or less. When the gelation time exceeds 1200 seconds, a satisfactory matte effect cannot be obtained. In addition, it is preferable that the gelation time of the powder coating (B) is shorter than the gelation time of the powder coating (A), and the difference in the gelation time therebetween is 400 seconds or more, and preferably 800 seconds or more. When the difference in the gelation time is less than 400 seconds, a satisfactory matte effect cannot be obtained. The gelation time for the powder coating (A) and the powder coating (B) can be adjusted by a functional group value of the resin and the kinds of the curing agent.

In the present invention, the gelation time refers to a time at which a viscoelasticity ratio (tan δ) calculated

from storage modulus (G') and loss modulus (G") according to the following formula:

$$\tan \delta = G''/G'$$

equals 1, when the dynamic viscoelasticity is determined with the following apparatus and conditions.

Determination apparatus: Soliquid Meter MR300 (manufactured by UBM Co., Ltd.)
Determination method: Dynamic viscoelasticity (torque)
Jig: Parallel plates, diameter: 17.99 mm, gap: 1 mm
Strained Angle: 2°
Frequency: 2 Hz
Temperature: 160°C (constant)

In addition, the matte coating film obtained from the powder coating composition of the present invention has a 60° specular gloss of preferably 80 or less, and more preferably from 20 to 70.

Further, by using the powder coating (B) that is uncolored, it is not necessary to prepare the matte colored powder coatings for every necessary color, so that the matte coating film can be easily obtained using an ordinary colored powder coating not for use in the matte coating film.

In the present invention, it is preferable that two or more kinds of colored powder coatings having different hues are contained as the powder coating (A), from the viewpoint of obtaining a coating film having a wide range of colors with a smaller number of powder coatings. When two or more kinds of the colored powder coatings are combined, the selection of colors and the formulation ratio of each of the colored powder coatings can be properly selected depending upon the hue of the desired coating film. In order to obtain a coating film having a more homogeneous hue, in the present invention, the difference in lightness in each of the colored powder coatings to be combined is preferably within 30, and more preferably within 25. Here, the lightness refers to L* value as determined by L*a*b* colorimetric system (CIE 1976) which was standardized by Commission Internationale de l'Eclairage (CIE) and adopted in JIS Z 8729. Here, L* value, a* value and b* value are determined by SCI method (method of determining color including the direction of the regular reflection), which is a method for determining color of which found values are independent from the surface state of the object.

In the present invention, each of the powder coating (A) and the powder coating (B) at least comprises a resin and a curing agent in the same manner as an ordinary powder coating, except that the powder coating (B) does not contain a colorant.

The resin is not particularly limited as long as the resin has a functional group capable of reacting with a curing agent, such as an epoxy group, a carboxyl group or a hydroxyl group, and includes an acrylic resin, an epoxy resin, a polyester and the like. Among them, the acrylic resin and the polyester are preferable from the viewpoint of weathering resistance, and the polyester is preferable from the viewpoint of physical properties of the coating film.

The acrylic resin is obtained by copolymerizing a monomer having a functional group capable of reacting with a curing agent and other copolymerizable vinyl monomer. The monomer having an epoxy group includes glycidyl acrylate, glycidyl methacrylate and the like; the monomer having a carboxyl group includes acrylic acid, methacrylic acid and the like; and the monomer having a hydroxyl group includes an acrylate containing a hydroxyl group such as 2-hydroxyethyl acrylate, 3-hydroxypropyl acrylate, 2-hydroxypropyl acrylate, 4-hydroxybutyl acrylate, 3-hydroxybutyl acrylate, 2-hydroxy-2-methylpropyl acrylate, 5-hydroxypentyl acrylate, and 6-hydroxyhexyl acrylate, and a methacrylate containing a hydroxyl group such as 2-hydroxyethyl methacrylate, 3-hydroxypropyl methacrylate, 2-hydroxypropyl methacrylate, 4-hydroxybutyl methacrylate, 3-hydroxybutyl methacrylate, 2-hydroxy-2-methylpropyl methacrylate, 5-hydroxypentyl methacrylate, and 6-hydroxyhexyl methacrylate, and addition reaction product of the above-mentioned acrylate containing a hydroxyl group or methacrylate containing a hydroxyl group, and ε-caprolactone, respectively. The above-mentioned monomer having a functional group can be used singly or in a combination of two or more kinds.

The other vinyl monomer copolymerizable with the above-mentioned monomer having a functional group includes acrylates such as methyl acrylate, ethyl acrylate, n-, iso- and tert-butyl acrylates, cyclohexyl acrylate, 2-ethylhexyl acrylate and lauryl acrylate; methacrylates such as methyl methacrylate, ethyl methacrylate, n-, iso- and tert-butyl methacrylates, cyclohexyl methacrylate, 2-ethylhexyl methacrylate, and lauryl methacrylate; and aromatic vinyl monomers such as styrene, α-methylstyrene, and vinyltoluene. In addition, these vinyl monomers can be used singly or in combination of two or more kinds.

The epoxy resin is preferably an epoxy resin having an average of one or more epoxy groups in one molecule, and specifically includes bisphenol-type epoxy resins (A type, B type, F type and the like); novolak type phenolic resins such as phenol novolak type epoxy resin and cresol novolak type epoxy resin; a reaction product of a phenol novolak or o-cresol novolak epoxy resin and a bisphenol-type epoxy resin (A type, B type, F type or the like), with epichlorohydrin;

a reaction product of a phenol novolak or o-cresol novolak epoxy resin and a bisphenol-type epoxy resin (A type, B type, F type or the like); and the like. These epoxy resins can be used singly or in combination of two or more kinds.

The polyester can be obtained by polycondensing an acid component comprising a polycarboxylic acid as a main component, and an alcohol component comprising a polyhydric alcohol as a main component according to an ordinary method.

The acid component includes terephthalic acid, isophthalic acid, phthalic acid, trimellitic acid, pyromellitic acid and anhydrides thereof, aromatic dicarboxylic acids such as 2,6-naphthalenedicarboxylic acid, and 2,7-naphthalenedicarboxylic acid and anhydrides thereof; saturated aliphatic dicarboxylic acids such as succinic acid, adipic acid, azelaic acid, sebacic acid, dodecanedicarboxylic acid, and 1,4-cyclohexanedicarboxylic acid, and anhydrides thereof; lactones such as γ-butyrolactone and ε-caprolactone; aromatic hydroxymonocarboxylic acids such as p-oxyethoxybenzoic acid; hydroxycarboxylic acids corresponding thereto; and the like. Among them, terephthalic acid and isophthalic acid are preferable. In addition, the content of isophthalic acid is preferably 60% by weight or more, and more preferably 80% by weight or more, from the viewpoint of weathering resistance. The acid component can be used alone or in combination of two or more kinds.

The alcohol component includes linear or branched glycols such as ethylene glycol, 1,2-propanediol, 1,3-propanediol, 1,2-butanediol, 1,3-butanediol, 1,4-butanediol, 1,2-pentanediol, 1,4-pentanediol, 1,5-pentanediol, 2,3-pentanediol, 1,4-hexanediol, 1,5-hexanediol, 1,6-hexanediol, 2,5-hexanediol, 3-methyl-1,5-pentanediol, 1,12-dodecanediol, 1,8-octadecanediol, diethylene glycol, triethylene glycol, 1,4-cyclohexanediol, 1,4-cyclohexanedimethanol, an alkylene oxide adduct of bisphenol A, an alkylene oxide adduct of bisphenol S, and neopentyl glycol; trihydric or higher polyhydric alcohols such as trimethylolpropane, glycerol, and pentaerythritol; and the like. Among them, ethylene glycol, neopentyl glycol and 1,6-hexanediol are preferable. The alcohol component can be used alone or in admixture of two or more kinds.

The curing agent is not particularly limited. When the curing agent is used together with the resin having an epoxy group, the curing agent includes, for example, polycarboxylic acid compounds, acid anhydrides, a compound containing an amino group and the like. When the curing agent is used together with the resin having a carboxyl group, the curing agent includes a compound containing an epoxy group, a β-hydroxyalkylamide compound and the like. When the curing agent is used together with the resin having a hydroxyl group, the curing agent includes a blocked isocyanate, a melamine compound and the like. Among them, it is preferable that at least one member selected from the group consisting of a β-hydroxyalkylamide compound, a blocked isocyanate and a melamine compound is contained in the powder coating (B), from the viewpoint of matte property.

The polycarboxylic acid compound includes, for example, aliphatic polycarboxylic acids such as adipic acid, sebacic acid, azelaic acid, decanedicarboxylic acid, decanedicarboxylic acid, hexadecanedicarboxylic acid, eicosanedicarboxylic acid, and tetraicosanedicarboxylic acid; aromatic polycarboxylic acids such as isophthalic acid and trimellitic acid; alicyclic polycarboxylic acids such as hexahydrophthalic acid and tetrahydrophthalic acid; and the like. Among them, decanedicarboxylic acid is preferable. These can be used alone or in combination of two or more kinds.

The acid anhydride includes the following aliphatic, alicyclic or aromatic acid anhydrides.

The aliphatic acid anhydride includes succinic anhydride, maleic anhydride, citraconic anhydride, polyadipic anhydride, polyazelaic acid anhydride, and polysebacic anhydride; those that are liquid at room temperature such as dodecenylsuccinic anhydride, poly(ethyloctadecanediacid) anhydride, poly(phenylhexadecanediacid) anhydride and the like.

The alicyclic acid anhydride includes hexahydrophthalic anhydride, tetrahydrophthalic anhydride, methylcyclohexenedicarboxylic acid anhydride, hettic acid anhydride, hymic anhydride, and methylcyclohexenetricarboxylic acid anhydride; those that are liquid at room temperature such as methyl tetrahydrophthalic anhydride, methyl hexahydrophthalic anhydride, methylhymic anhydride, and the like.

The aromatic acid anhydride includes phthalic anhydride, trimellitic acid anhydride, pyromellitic acid anhydride, tetrabromophthalic anhydride, tetrachlorophthalic anhydride, benzophenone tetracarboxylic acid anhydride, ethylene glycol bis(anhydrotrimellitate), glycerol tris(anhydrotrimellitate), and the like.

The compound containing an amino group includes, for example, dicyandiamide, a polyamine compound, an imidazole, and the like. The polyamine compound includes, for example, polyhydrazide compounds such as adipic dihydrazide and sebacic dihydrazide. Also, the imidazole includes, for example, an imidazole compound containing an alkyl group or a substituted alkyl group as a substituent, such as 2-methylimidazole, 2-ethylimidazole, 2-heptadecylimidazole, 1-benzyl-2-methylimidazole, and 1-(2-cyanoethyl)-2-undecylimidazole; an imidazole compound containing an aminotriazine ring, such as 1-[2-(4,6-diamino-1,3,5-triazin-2-yl)ethyl]-2-methylimidazole and 1-[2-(4,6-diamino-1,3,5-triazin-2-yl)ethyl]-2-ethyl-4-methylimidazole; and a salt formed between an imidazole and a carboxylic acid, such as a salt formed between 1-cyanoethyl-2-ethyl-4-methylimidazole and trimellitic acid, and a salt formed between 1-cyanoethyl-2-methylimidazole and trimellitic acid.

The curing rate can be adjusted by using the polycarboxylic acid compound, the acid anhydride and the compound containing an amino group together with a known curing accelerator. The curing accelerator is not particularly limited, and includes, for example, tertiary amines such as triethylamine and benzyldimethylamine; imidazoles such as 2-methylimidazole and 2-ethyl-4-methylimidazole and imidazoline compounds which are precursors thereof; quaternary ammonium salts such as tetramethylammonium bromide and benzyltrimethylammonium bromide; phosphines such as triphenylphosphine and n-butyltriphenyl; and phosphonium salts.

The compound containing an epoxy group refers to a compound having one or more epoxy groups in one molecule, and includes, for example, triglycidyl isocyanurate, the above-mentioned epoxy resins, and an acrylic resin containing an epoxy group, and the like.

The β-hydroxyalkylamide compound refers to a compound represented by the formula (I):

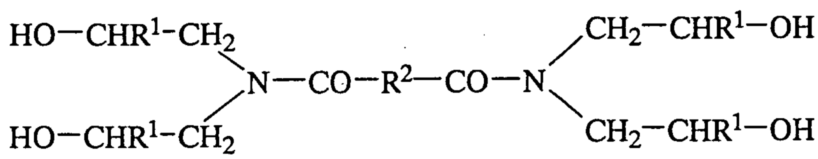

(I)

wherein $R^1$ is a hydrogen atom or an alkyl group having 1 to 5 carbon atoms; and $R^2$ is an alkylene group having 1 to 12 carbon atoms,
which includes, for example, Primid XL-552.

The blocked isocyanate refers to a blocked isocyanate which is allowed not to show an activity at a given temperature or lower by blocking an isocyanate group with a blocking agent; and a uretodione which is allowed not to show an activity by reacting the isocyanate groups with each other to form a uretodione ring.

The blocked isocyanate is obtained by blocking an isocyanate group of the polyisocyanate compound with a blocking agent.

The polyisocyanate compound includes, for example, aliphatic diisocyanate compounds such as hexamethylene diisocyanate, trimethylene diisocyanate, 1,4-tetramethylene diisocyanate, pentamethylene diisocyanate, lysine diisocyanate, and 1,3-butylene diisocyanate; alicyclic diisocyanate compounds such as isophorone diisocyanate, 4,4'-methylenebis(cyclohexyl isocyanate), methylcyclohexane-2,4-(or -2,6-)diisocyanate, 1,3-(or -1,4-)-di(isocyanatomethyl)cyclohexane, 1,4-cyclohexane diisocyanate, 1,3-cyclopentane diisocyanate, and 1,2-cyclohexane diisocyanate; aromatic diisocyanate compounds such as xylylene diisocyanate, metaxylylene diisocyanate, tetramethylxylylene diisocyanate, tolylene diisocyanate, 4,4'-diphenylmethane diisocyanate, and (m- or p-)phenylene diisocyanate; polyisocyanate compounds having three or more isocyanate groups such as triphenylmethane-4,4',4"-triisocyanate; an adduct obtained by reacting a polyisocyanate compound in an amount so that isocyanate groups are in excess to hydroxyl groups of a polyol such as ethylene glycol, propylene glycol, 1,4-butylene glycol, a polyalkylene glycol, trimethylolpropane, or hexanetriol; burette type adducts and isocyanate ring type adducts of hexamethylene diisocyanate, isophorone diisocyanate, tolylene diisocyanate, xylylene diisocyanate, 4,4'-diphenylmethane diisocyanate, or 4,4'-methylenebis (cyclohexyl isocyanate); and the like.

The blocking agent used for blocking the polyisocyanate compound includes, for example, phenol-based, lactam-based, oxime-based, pyrazole-based, triazole-based and other blocking agents. Specific examples of these blocking agents include, for example, phenol-based blocking agents such as phenol, cresol, xylenol, nitrophenol, chlorophenol, ethylphenol, hydroxydiphenyl, t-butylphenol and methyl hydroxybenzoate; lactam-based blocking agents such as ε-caprolactam, δ-valerolactam, γ-butyrolactam, and β-propiolactam; oxime-based blocking agents such as acetamide oxime, formamide oxime, acetone oxime, methyl ethyl ketone oxime, butanone oxime, methyl isobutyl ketone oxime, methyl amyl ketone oxime, diacetyl monooxime, benzophenone oxime, cyclohexanone oxime, and methylhexanone oxime; pyrazole-based blocking agents such as 1,2-pyrazole and 3,5-dimethylpyrazole; triazole-based blocking agents such as 1H-1,2,4-triazole, 1H-1,2,3-triazole, 1H-1,2,4-triazole-3-thiol, and 1H-1,2,3-triazolo[4,5-b]pyridine; and the like.

The melamine compound refers to a condensate obtained by reacting a compound containing an amino group such as melamine, urea or benzoguanamine and an aldehyde-based compound such as formaldehyde or glyoxal according to a known process; and an etherified product obtained by etherifying the condensate with an alcohol. The commercially available products thereof include hexamethoxymethyl melamine "CYMEL 303" (Mitsui Cytec, Inc.), "POWDERLINK PL-1174" (Mitsui Cytec, Inc.), and the like.

In the present invention, one of the preferred embodiments of the powder coating (B) includes a powder coating comprising a resin comprising a polyester or acrylic resin, having a hydroxyl group; and a curing agent comprising a blocked isocyanate which is blocked with at least one blocking agent selected from the group consisting of oxime-based blocking agents, pyrazole-based blocking agents and triazole-based blocking agents (hereinafter referred to as Embodiment 1).

The polyester or acrylic resin, having a hydroxyl group, mentioned above has an average hydroxyl value of

preferably 40 mg KOH/g or more, and more preferably 60 mg KOH/g or more, from the viewpoint of matte effects.

In addition, the above-mentioned blocked isocyanate is more preferably a blocked isocyanate which is blocked with at least one blocking agent selected from the group consisting of methyl isobutyl ketone oxime, methyl ethyl ketone oxime, 1,2-pyrazole, 3,5-dimethylpyrazole, 1H-1,2,4-triazole, 1H-1,2,3-triazole, 1H-1,2,4-triazole-3-thiol and 1H-1,2,3-triazolo[4,5-b]pyridine. The blocked isocyanate has a dissociation temperature of the blocking agent or uretodione ring of preferably 160°C or less, and more preferably 140°C or less in order to obtain a satisfactory matte effect.

Incidentally, the content of the curing agent in the powder coating (B) cannot be generally determined because the content differs depending upon the kinds such as the kinds of the resins and the curing agents. For example, the content of the blocked isocyanate which is blocked with at least one blocking agent selected from the group selected from the oxime-based blocking agents, the pyrazole-based blocking agents and the triazole-based blocking agents mentioned above is preferably from 10 to 80 parts by weight, and more preferably from 15 to 60 parts by weight, based on 100 parts by weight of the resin having a hydroxyl group.

In addition, another one of preferred embodiments of the powder coating (B) include a powder coating comprising a resin comprising a resin having a hydroxy group and a resin having an epoxy group; and a curing agent comprising a compound containing a carboxyl group and a blocked isocyanate (hereinafter referred to as Embodiment 2). By using the powder coating, an even higher matte effect can be obtained, and at the same time pinhole and lack of hiding can be prevented. Here, pinhole refers to abnormality in the coating film formed by foams on the surface of and in the internal of the coating film produced during he application of the powder coating composition. Also, lack of hiding refers to a phenomenon in which a coated object is not sufficiently hidden with a coating film so that the surface of the coated object can be see-through even over the coating film. In addition, a feature of the matte powder coating composition of the present invention resides in that the composition comprises a powder coating (A) and a powder coating (B) having different gelation time, in other words, different curing rates. If the powder coating (B) is the above-mentioned powder coating, a satisfactory matte effect can be obtained even when the gelation time of the powder coating (A) is made shorter, i.e., the curing rate is faster, whereby the stoving temperature can be lowered or the stoving time can be shortened.

The above-mentioned resin having a hydroxyl group in the powder coating (B) may be any of acrylic resins, polyesters and the like. The polyester is preferable from the viewpoint of matte effect.

The above-mentioned resin having a hydroxyl group in the powder coating (B) may comprise two or more kinds of resins. In any case, the average hydroxyl value is preferably 40 mg KOH/g or more, and more preferably 60 mg KOH/g or more, from the viewpoint of matte effect. Here, in the present invention, the hydroxyl value of the resin (mg KOH/g) is determined by dissolving a 1 g resin sample in a mixed solution of acetic anhydride and pyridine (prepared by mixing acetic acid anhydride/pyridine in a volume ratio of 19/1), thermally refluxing the solution at 100°C for 1 hour to acetylate a hydroxyl group, thereafter adding ion-exchanged water thereto and further thermally refluxing the solution, thereafter cooling the solution, adding a phenolphthalein indicator, and back-titrating the resulting solution with a 0.5 N toluene/methanol solution of potassium hydroxide.

The above-mentioned resin having an epoxy group may be any of acrylic resins, epoxy resins and the like. The acrylic resin is preferable from the viewpoint of matte effect.

The above-mentioned resin having an epoxy group has a weight-average molecular weight of preferably from 5,000 to 100,000, and more preferably from 10,000 to 50,000, from the viewpoint of matte effect. Here, in the present invention, the weight-average molecular weight is determined by gel permeation chromatography (GPC) method. Specifically, the weight-average molecular weight is determined with GPC Model LC-08 (A-5432) manufactured by Japan Analytical Industry Co., Ltd. using a solution prepared by dissolving 0.4 parts by weight of a resin sample based on 100 parts by weight of tetrahydrofuran as a sample solution, and calculated with polystyrene.

In addition, the resin having an epoxy group has an epoxy equivalence of preferably from 250 to 600 g/mol, and more preferably from 350 to 500 g/mol, from the viewpoint of matte effect. Here, in the present invention, the epoxy equivalence of the resin is determined by hydrochloric acid-pyridine method. Specifically, 25 ml of a hydrochloric acid-pyridine solution is added to a 1 g resin sample, the mixture is heated to 130°C for 1 hour, the heated mixture is then titrated against a 0.1 N alcohol solution of potassium hydroxide with phenolphthalein as a indicator, and the epoxy equivalence is calculated from the amount of the 0.1 N alcohol solution of potassium hydroxide consumed.

The resin having an epoxy group has a hexane tolerance of preferably from 3.0 to 8.5, and more preferably from 4.0 to 8.0, from the viewpoint of matte effect and prevention of dewetting leading to cratering. Here, in the present invention, the hexane tolerance of the resin is determined according to the following method. Specifically, 0.5 g of a resin is weighed and placed in a 100 ml glass beaker (inner diameter: 5 cm), 10 ml of dioxane is added thereto to dissolve the resin, to give a sample solution. A piece of paper with a Chinese character *"katu* (active)" having a font size of 9 point is placed underneath the beaker, the temperature of the sample solution is adjusted to 20°C, and the solution is titrated against hexane. Measurements are taken twice each by defining as an endpoint a point where the solution turns white turbid in a manner that the character is not legible from above, and an average thereof is defined as a hexane tolerance.

The above-mentioned compound containing a carboxyl group includes the polycarboxylic acid compounds and the resin containing a carboxyl group mentioned above. In the present invention, decanedicarboxylic acid, and an acrylic resin containing a carboxyl group and having an acid value of 200 mg KOH/g or more are preferable, from the viewpoint of matte effect. Here, in the present invention, the acid value of the resin is determined by dissolving a 1 g resin sample in a proper amount of cyclohexanone, adding a phenolphthalein indicator thereto, and titrating against a 0.1 N methanol solution of potassium hydroxide.

The above-mentioned blocked isocyanate can be exemplified by the blocked isocyanates in the same manner as those mentioned above, and a blocked isocyanate which is blocked with ε-caprolactam is preferable, from the viewpoint of preventing foaming on the surface or in the internal of the coating film. The content of the blocked isocyanate which is blocked with ε-caprolactam is preferably 20% by weight or more, and more preferably 50% by weight or more, in a total amount of the blocked isocyanate, from the viewpoint of preventing foaming.

The content of the above-mentioned blocked isocyanate is preferably from 15 to 60 parts by weight, and more preferably from 20 to 60 parts by weight, based on 100 parts by weight of a total amount of the resin having a hydroxyl group, the resin having an epoxy group, and the compound containing a carboxyl group, from the viewpoint of matte effect and prevention of foaming on the surface and in the internal of the coating film.

The molar ratio of the epoxy groups to the carboxyl groups contained in the powder coating (B) (epoxy groups/carboxyl groups) is preferably from 0.5 to 2.0, and more preferably from 0.8 to 1.2, from the viewpoint of matte effect and water resistance.

In the powder coating (B) of both Embodiments 1 and 2 mentioned above, the molar ratio of the hydroxyl groups to the blocked isocyanate contained in the powder coating (B) (hydroxyl groups/blocked isocyanate) is preferably from 0.5 to 2.0, and more preferably from 0.8 to 1.2, from the viewpoint of matte effect and the properties of the coating film.

Similarly, in the powder coating (B) of Embodiments 1 and 2 mentioned above, it is preferable that a tin-based catalyst is contained as a curing catalyst. The tin-based catalyst includes dibutyltin dilaurate, dibutyltin distearate, bis (2-ethylhexanoate)tin, n-butyltris(2-ethylhexanoate)tin, di-n-butylbis(2-ethylhexanoate)tin, di-n-butylbis(2,4-pentanedionate)tin, dioctyl dilauryltin, tetra-n-butyltin, tetra-n-octyltin, dibutyltin diacetate, tetrabutyl diacetoxydistannoxane, acetylacetone tin, dibutyltin oxide, dimethyltin oxide, and the like.

In addition, in the powder coating (B), especially in the powder coating (B) of Embodiment 2, which is the preferred embodiment of the powder coating (B), in order to adjust the gelation time, it is preferable that the powder coating contains a curing catalyst such as an imidazole compound, an imidazoline compound and a metal salt composite thereof, a tertiary phosphine compound, a quaternary phosphonium salt compound, or a quaternary ammonium salt compound.

The imidazole compound is not particularly limited, and includes alkyl imidazoles such as 2-ethyl-4-methylimidazole, 1-methylimidazole, 1,2-dimethylimidazole, 2-methylimidazole, 2-ethylimidazole, 2-undecylimidazole, 2-heptadecylimidazole, and 2-isopropylimidazole; carbamylalkyl-substituted imidazoles such as 1-(2-carbamylethyl)imidazole; cyanoalkyl-substituted imidazoles such as 1-cyanoethyl-2-methylimidazole; aromatic-substituted imidazoles such as 2-phenylimidazole, 2-phenyl-4-methylimidazole and 1-benzyl-2-methylimidazole; alkenyl-substituted imidazoles such as 1-vinyl-2-methylimidazole; allyl-substituted imidazoles such as 1-allyl-2-ethyl-4-methylimidazole; polyimidazoles; and the like, and the alkyl imidazoles and the aromatic-substituted imidazoles are preferably included.

The imidazoline compound is not particularly limited, and includes, for example, 2-phenylimidazole, 2-methylimidazoline, 2-undecylimidazoline, 2-heptadecylimidazoline, and the like.

The metal salt composite can be exemplified by those forming a composite of the above-mentioned imidazole compound or the above-mentioned imidazoline compound with a metal salt. The metal salt is not particularly limited, and includes those formed between a metal such as copper, nickel, cobalt, calcium, zinc, zirconium, silver, chromium, manganese, tin, iron, titanium, antimony, or aluminum, and a salt such as chloride, bromide, fluoride, sulfate, nitrate, acetate, maleate, stearate, benzoate, or methacrylate; and the like.

The tertiary phosphine compound is not particularly limited, and includes, for example, triphenylphosphine, tritolylphosphine and the like.

The above-mentioned quaternary phosphonium salt compound is not particularly limited, and includes, for example, benzyl triphenyl phosphonium chloride, butyl triphenyl phosphonium bromide, ethyl triphenyl phosphonium iodide, ethyl triphenyl phosphonium bromide, and the like.

The quaternary ammonium salt compound is not particularly limited, and includes, for example, tetraethylammonium chloride, tetraethylammonium bromide, benzyltrimethylammonium bromide, and the like.

Each of the powder coating (A) and the powder coating (B) may contain an extender which substantially have no color strength besides the resin and the curing agent. The extender is effective in the adjustment of specific gravity of the powder coating, and includes talc, silica, calcium carbonate, barium sulfate and the like.

Each of the powder coating (A) and the powder coating (B) may be further properly formulated with an additive such as a catalyst, a surface modifying agent, an ultraviolet absorbent, an antioxidant, or a pinhole preventive, and

the catalyst is effect for the adjustment of the gelation time.

In addition, as the colorant contained in the powder coating (A), all the inorganic pigments and organic pigments which are ordinarily used in powder coatings can be used. The inorganic pigment includes titanium oxide, red oxide, chromium titanium yellow, yellow iron oxide, carbon black and the like. The organic pigment includes azo-based pigments, perylene-based pigments, condensed azo-based pigments, nitro-based pigments, nitroso-based pigments, phthalocyanine-based pigments, anthraquinone-based pigments, quinacridone-based pigments, dioxane-based pigments. Specifically, the azo-based pigment includes Lake Red, Fast Yellow, Disazoyellow, Permanent Red and the like; the nitro-based pigment includes Naphthol Yellow and the like; the nitroso-based pigment includes Pigment Green B, Naphthol Green and the like; the phthalocyanine-based pigment includes Phthalocyanine Blue, Phthalocyanine Green and the like; the anthraquinone-based pigment includes Indanthrene Blue, Dianthraquinonyl Red and the like; the quinacridone-based pigment includes Quinacridone Red, Quinacridone Violet and the like; the dioxane-based pigment includes Carbazole Dioxazine Violet and the like; respectively. The content of the colorant in the powder coating (A) differs depending upon its kinds. It is preferable that the content of the inorganic pigment is from 0.05 to 60 parts by weight, and the content of the organic pigment is from 0.05 to 20 parts by weight, respectively, based on 100 parts by weight of the resin.

The powder coating (B) has an average particle size of preferably 25 μm or less, and more preferably 20 μm or less, from the viewpoint of preventing lack of hiding and obtaining a homogeneous quality of the coating film.

In addition, the difference in average particle sizes of the powder coating (B) and the powder coating (A) is preferably within ±15%, and more preferably within ±10%, the average particle size of the powder coating (B), from the viewpoint of facilitating the adjustment of gloss, thereby obtaining a satisfactory matte effect.

In addition, the powder coating (B) has a standard deviation of the particle size of preferably 20 μm or less, and more preferably 15 μm or less, from the viewpoint of preventing lack of hiding and obtaining homogeneous quality of the coating film.

In the present invention, the average particle size of the powder coating means a volume-average particle size, which is referred to a value obtained using a measurement apparatus "MICRO TRAC HRA X-100" (manufactured by NIKKISO Co., Ltd.) and an analyzing program "MICRO TRAC D.H.S. X100 Data Handling System SD-9300 PRO-100" (manufactured by NIKKISO Co., Ltd.) under the measurement conditions in which "Particle Transparency" is set at "reflect." Also, the standard deviation of the powder coating in the powder coating refers to a value obtained from the data obtained during the measurement of the average particle size according to the following formula:

$$\sigma = [\Sigma\{(D - X)^2F\}/\Sigma F]^{1/2}$$

wherein σ is a standard deviation of particle size, D is a particle size of individual particles, F is frequency of the particles, X is a volume-average particle size, which is expressed as $X = \sum(DF)/EF$.

It is preferable that the specific gravity of the powder coating (A) and the powder coating (B) is almost the same in order to prevent separation of both the powder coatings in the powder coating composition and fluctuation of gloss value due to fluctuation of the ratio of the coated amounts of both the powder coatings. Therefore, the difference in specific gravities of the powder coating (A) and the powder coating (B) is preferably 0.2 or less, and more preferably 0.1 or less.

The content of the powder coating (B) in the powder coating composition of the present invention is preferably 30% by weight or less, and more preferably 25% by weight or less in order to prevent lack of hiding of the coating film.

In the present invention, the processes for preparing the powder coating (A) and the powder coating (B) are not particularly limited, and the powder coatings can be prepared by a known preparation process in the field of powder coating. The process includes, for example, a process comprising previously mixing raw materials such as a resin, a curing agent, a colorant and various additives with a Super Mixer, a Henschel mixer or the like, and melt-kneading the raw materials with a kneading apparatus such as a kneader or an extruder. The heating temperature during melt-kneading is a temperature lower than the stoving and curing temperature at which at least a part of the raw materials is melted and a whole can be kneaded, generally preferably from 80° to 140°C or so, and especially in the case where the powder coating (B) is prepared, the heating temperature is more preferably from 80° to 120°C. It is preferable that the melt-kneaded product is solidified by cooling the molten mixture with a cooling roller, a cooling conveyor or the like, the solid is then subjected pulverization steps such as rough pulverization and fine pulverization to a desired particle size, and coarse particles and fine particles are removed to subject to classification step for the purpose of adjusting the particle size distribution.

The resulting powder coating (A) and powder coating (B) may be further formulated with a surface modifying agent in order to improve fluidity, chargeability and the like. The surface modifying agent is intended to improve the properties of the surface of the powder particles by adding the surface modifying agent to the powder particles to deposit on their surfaces, and includes inorganic fine particles made of silica, aluminum oxide (alumina) or the like,

and organic particles made of an acrylic resin or the like. The content of the surface modifying agent is preferably from 0.01 to 5 parts by weight based on 100 parts by weight of the powder coating (A) and the powder coating (B).

The matte powder coating composition of the present invention is prepared by mixing the powder coating (A) and the powder coating (B) mentioned above. The mixing is, for example, carried out as follows. First, two kinds or three or more kinds of the powder coating (A) having different colors are furnished, and the formulation amount of the powder coating (A) of each color is determined and mixed to give a desired hue. Next, the mixed coating powders (A) obtained are formulated with the powder coating (B) in an amount just so that the desired gloss can be obtained, to give a matte powder coating composition of the present invention.

The process for preparing a powder coating composition of the present invention comprising mixing the powder coating (A) and the powder coating (B) is not particularly limited. The process includes, for example, a process comprising dry-blending the components with a V-blender, a Henschel mixer, a rotary blender or the like. Also, the powder coating (A) and the powder coating (B) can be also bonded to each other by granulation processes described in WO 98/51748, Japanese Patent Laid-Open Nos. Hei 7-188586, Hei 10-43574, Hei 11-116854, 2000-239579, 2000-281978 and the like.

The method for toning color of the colored powder coating used as the powder coating (A) is not particularly limited. The method includes, for example, a method for toning color described in Japanese Patent Laid-Open No. 2002-155223 using a powder coating having an achromatic color and a powder coating having a chromatic color.

The powder coating composition of the present invention is applied to an object to be coated, and thereafter the applied coating is stoved by means of heat or the like, whereby a matte coating film can be obtained.

The method for coating with a powder coating composition of the present invention is not particularly limited, and those methods which are well known by one ordinary skill in the art such as spray-coating method, electrostatic powder coating method, or fluidized bed coating method can be used. The electrostatic powder coating method is preferable from the viewpoint of application and deposition efficiency.

The object to be coated is not particularly limited, and specifically includes an iron plate, a steel plate, an aluminum plate and the like, and those plates that are surface-treated, and the like. The formation of the coating film on the object to be coated has an excellent protective function even when the coating film is composed of a single layer comprising the powder coating composition of the present invention. Alternatively, the powder coating composition of the present invention may be applied as an overcoat paint over an undercoat coating film. As the undercoat paint for forming the undercoat coating film, a known one such as an electrostatic deposition paint or a primer can be used.

The thickness of the coating film during the application of the powder coating composition of the present invention is preferably from 20 to 100 μm, and more preferably from 40 to 70 μm, from the viewpoint of preventing lack of hiding of the coating film, and preventing generation of bubbles on the surface and in the internal of the coating film.

The temperature and time period for stoving differs depending upon the kinds and amounts of the curing agent used. The temperature is preferably from 140° to 240°C, and more preferably from 160° to 220°C from the viewpoint of preventing generation of foams on the surface and in the internal of the coating film. In addition, the time period for stoving can be properly set depending upon the stoving temperature.

## EXAMPLES

The present invention will be described in more detail hereinbelow by means of examples and comparative examples, without intending to limit the present invention thereto.

### Preparation Example of Resin

A reaction vessel equipped with a stirrer, a thermometer, a condenser and a nitrogen gas inlet was charged with 400 parts by weight of xylene, and temperature was elevated to 135°C under nitrogen atmosphere. A mixture composed of 250 parts by weight of styrene, 40 parts by weight of n-butyl acrylate, 72 parts by weight of methyl methacrylate, 25 parts by weight of 2-hydroxyethyl methacrylate, 213 parts by weight of glycidyl methacrylate and 8 parts by weight of tert-butyl peroxyoctoate was added dropwise thereto over a period of 6 hours. Even after the termination of the dropping, the mixture was kept at the same temperature for 10 hours, to carry out a polymerization reaction. Next, the solvent was removed at 170°C under reduced pressure of 20 mmHg, to give a resin C containing a glycidyl group (used for a powder coating (B9) mentioned below).

### Preparation Example of Powder Coating

A resin, a curing agent, a colorant and an additive shown in Table 1 were mixed for 3 minutes with a mixer "Super Mixer" (manufactured by Nihon Spindle Manufacturing Co., Ltd.), and the mixture was melt-kneaded at 110°C with a melt-kneader "Cokneader" (manufactured by Buss). Subsequently, the melt-kneaded mixture obtained was

cooled to room temperature, thereafter the mixture was ground with a pulverizer "Atomizer" (manufactured by Fuji Paudal Co., Ltd.), and further finely pulverized with a fine pulverizer "Jet Mill IDS-2 Type" (manufactured by Nippon Pneumatic Mfg. Co., Ltd.). The resulting powder was classified using an air classifier "Model DS-2" (manufactured by Nippon Pneumatic Mfg. Co., Ltd.), to remove fine particles and coarse grains, whereby a powder coating (A) having an average particle size of 18 μm or 35 μm and a powder coating (B) having an average particle size of 10 μm, 18 μm or 35 μm. Here, the average particle size is a volume-average particle size determined with a particle size analyzer "MICRO TRAC HRA X-100" (manufactured by NIKKISO Co., Ltd.). During the determination, "MICRO TRAC D. H. S. X100 Data Handling System SD-9300 PRO-100" (manufactured by NIKKISO Co., Ltd.) was used as an analytical program, and "Particle Transparency" was set as "reflect" as a determination condition.

Lightness of the powder coating (A) and gelation time, and specific gravity of the powder coating (A) and the powder coating (B) determined according to the following methods are shown in Table 1.

[Specific Gravity]

Specific gravity was determined according to a method as prescribed in JIS K0061 8.21.

[Lightness]

The powder coating is applied singly to a steel plate having a thickness of 0.8 mm subjected to zinc phosphate treatment with, using an electrostatic coater for powder coatings so as to give a coating film having a thickness of 80 μm. The coated plate is stoved at 180°C for 20 minutes, to give a coating film.

L* value, a* value and b* value of the resulting coating film are determined using a spectrophotometer "CM3600d" (manufactured by MINOLTA Co., Ltd.), under measurement conditions of $D_{65}$ light source, 10° scope of vision, SCI mode.

Table 1

| | | Powder Coating (A) | | | Powder Coating (B) | | | | | | | | |
|---|---|---|---|---|---|---|---|---|---|---|---|---|---|
| | | A1 | A2 | A3 | B1 | B2 | B3 | B4 | B5 | B6 | B7 | B8 | B9 |
| Resin | Polyester A | 59.2 | 59.2 | 59.2 | 27.4 | 26.6 | 25.7 | - | - | - | - | - | - |
| | Polyester B | - | - | - | 18.2 | 17.7 | 17.1 | 15.5 | 15.5 | 15.5 | 15.5 | 15.5 | 15.5 |
| | Polyester C | - | - | - | - | - | - | 19.4 | 19.4 | 19.4 | 19.4 | 19.4 | 19.4 |
| | Resin A Containing Glycidyl Group | - | - | - | - | - | - | 11.7 | 11.7 | 11.7 | 11.7 | - | - |
| | Resin B Containing Glycidyl Group | - | - | - | - | - | - | - | - | - | - | 11.7 | - |
| | Resin C Containing Glycidyl Group | - | - | - | - | - | - | - | - | - | - | - | 11.7 |
| Curing Agent | Blocked Isocyanate A | 9.9 | 9.9 | 9.9 | 23.6 | 12.5 | - | 19.4 | 15.5 | 15.0 | 8.4 | 15.5 | 15.5 |
| | Blocked isocyanate B | - | - | - | - | 12.5 | 26.4 | 0.0 | 3.9 | 8.4 | 15.0 | 3.9 | 3.9 |
| | Acrylic Resin Containing Carboxyl Group | - | - | - | - | - | - | 3.9 | 3.9 | 3.9 | 3.9 | 3.9 | 3.9 |
| | Dodecanedicarboxylic acid | - | - | - | - | - | - | 0.4 | 0.4 | 0.4 | 0.4 | 0.4 | 0.4 |
| Colorant | Titanium Oxide | 29.6 | 29.0 | 29.6 | - | - | - | - | - | - | - | - | - |
| | Phthalocyanine Blue Pigment | - | 0.0733 | - | - | - | - | - | - | - | - | - | - |
| Additive | Benzoin | 1.0 | 1.0 | 1.0 | 0.8 | 0.7 | 0.7 | 0.8 | 0.8 | 0.8 | 0.8 | 0.8 | 0.8 |
| | Zinc Catalyst | 0.1 | 0.1 | 0.3 | 0.2 | 0.2 | 0.2 | 0.2 | 0.2 | 0.2 | 0.2 | 0.2 | 0.2 |
| | Imidazole catalyst | - | - | - | - | - | - | 0.1 | 0.1 | 0.1 | 0.1 | 0.1 | 0.1 |
| | Surface-Modifying Agent | 0.3 | 0.3 | 0.3 | 0.2 | 0.2 | 0.2 | 0.2 | 0.2 | 0.2 | 0.2 | 0.2 | 0.2 |
| | Barium Sulfate | - | 0.53 | - | 29.6 | 29.5 | 29.6 | 27.2 | 27.2 | 27.2 | 27.2 | 27.2 | 27.2 |
| Lightness | | 94 | 85 | 94 | - | - | - | - | - | - | - | - | - |
| Gelation Time (sec) | | 1900 | 1850 | 1700 | 1350 | 800 | 600 | 350 | 350 | 350 | 350 | 350 | 450 |
| Specific Gravity | | 1.46 | 1.46 | 1.46 | 1.45 | 1.45 | 1.45 | 1.44 | 1.44 | 1.44 | 1.44 | 1.44 | 1.44 |

NOTE: The amount used is expressed as parts by weight.

Details of the raw materials shown in Table 1 are as follows.

Polyester A:

"Finedic M8034"
(manufactured by DAINIPPON INK AND CHEMICALS, INCORPORATED, hydroxyl value: 30 mg KOH/g)

Polyester B:

"U-PiCA Coat GV920"
(manufactured by Japan U-PiCA Company, Ltd., hydroxyl value: 210 mg KOH/g)

Polyester C:

"Finedic M8405"
(manufactured by DAINIPPON INK AND CHEMICALS, INCORPORATED, hydroxyl value: 23 mg KOH/g, weight-average molecular weight: 8800)

Resin A containing glycidyl group:

"Finedic A275"
(manufactured by DAINIPPON INK AND CHEMICALS, INCORPORATED, weight-average molecular weight: 24,000, epoxy equivalence: 400 g/mol, hexane tolerance: 7.0)

Resin B containing glycidyl group:

"Finedic A249A"
(manufactured by DAINIPPON INK AND CHEMICALS, INCORPORATED, weight-average molecular weight: 22,000, epoxy equivalence: 460 g/mol, hexane tolerance: 8.7)

Resin C containing glycidyl group:

Weight-average molecular weight: 17,000, epoxy equivalence: 400 g/mol, hexane tolerance: 5.9

Blocked Isocyanate A:

"VESTAGON B1530"
(manufactured by Degussa, NCO content: 15% by weight, polyisocyanate compound: isocyanuric ring trimer of isophorone diisocyanate is contained as a main component, blocking agent: ε-caprolactam)

Blocked isocyanate B:

"VESTANAT B1358"
(manufactured by Degussa, NCO content: 12.5% by weight, polyisocyanate compound: isocyanuric ring trimer of isophorone diisocyanate is contained as a main component, blocking agent: methyl ethyl ketone oxime)

Acrylic Resin Containing Carboxyl Group:

"JONCRYL 843"
(manufactured by JOHNSON POLYMER CORPORATION, acid value: 206 mg KOH/g)
Decanedicarboxylic acid: manufactured by Wako Pure Chemical Industries, Ltd.
Titanium oxide: "TIPAQUE CR90" (manufactured by ISHIHARA SANGYO KAISHA, LTD.)

Phthalocyanine blue pigment

"FASTOGEN Blue NK" (manufactured by DAINIPPON INK AND CHEMICALS, INCORPORATED)
Tin Catalyst: "NEOSTANN U100" (manufactured by NITTO KASEI CO., LTD.)
Surface-modifying agent: "Acronal 4F" (manufactured by BASF Corporation)
Imidazole catalyst: "Curezol C17Z" (manufactured by Shikoku Chemicals Corporation)
Barium sulfate: "Precipitated Barium Sulfate 100" (manufactured by Sakai Chemical Industry Co., Ltd.)

Examples 1 to 15 and Comparative Examples 1 to 3

The powder coating (A) and the powder coating (B) shown in Table 2 were mixed with Super Mixer, to give a powder coating composition.
The resulting powder coating composition was applied to a steel plate having a thickness of 0.8 mm subjected to zinc phosphate treatment with an electrostatic coater for powder coatings, so as to give a coating film having a thickness of from 50 to 60 µm. The coated plate was baked at 180°C for 20 minutes, to give a coating film. The 60° specular gloss of the resulting coating film was determined by a method as prescribed in JIS K5600-4-7. In addition, lack of hiding and finishing appearance were visually observed, and evaluated according to the following evaluation criteria. Hiding film thickness and pinhole limit film thickness were determined by the following methods. The results are shown in Table 2.

[Evaluation Criteria of Lack of Hiding]

Seeing from a distance of 50 cm,

◎ : Mottled patterns due to lack of hiding are not recognizable.
○: Mottled patterns due to lack of hiding are slightly recognizable.
× : Mottled patterns due to lack of hiding are clearly recognizable.

[Method for Determining Hiding Film Thickness]

In the above-mentioned coating, a coating was applied to a steel plate colored black and a steel plate colored white as steel plates, with varying film thicknesses. After the coating, both coated plates are colorimetrically determined, and the film thickness of which color difference (ΔE) is 1.0 or less is defined as a hiding film thickness.

[Evaluation Criteria of Finishing Appearance]

Seeing from a distance of 50 cm,

◎ : "Flickering" due to uneven gloss is not recognizable.

○: "Flickering" due to uneven gloss is slightly recognizable.
× : "Flickering" due to uneven gloss is clearly recognizable.

[Method for Determining Pinhole Limit Film Thickness]

In the above-mentioned coating, a coating was applied with varying film thicknesses, and the surface of the resulting coating film is cut with a cutter knife, and the film thickness at a point where bubbles begin to appear in a cross section of the film thickness is defined as a pinhole limit film thickness.

Table 2

| Ex. No. | Powder Coating (A) | Average Particle Size (μm) | Amount Used | Powder Coating (B) | Average Particle Size (μm) | Standard Deviation (μm) | Amount Used | Gloss | Lack of Hiding | Hiding Film Thickness | Finishing Appearance | Pinhole Limit Film Thickness |
|---|---|---|---|---|---|---|---|---|---|---|---|---|
| 1 | A1 | 35 | 80 | B2 | 35 | 12 | 20 | 39 | ○ | 100 | ○ | 100 |
| 2 | A1 | 18 | 80 | B2 | 18 | 10 | 20 | 40 | ◎ | 60 | ◎ | 100 |
| 3 | A1 | 18 | 70 | B2 | 18 | 10 | 30 | 29 | ○ | 80 | ◎ | 100 |
| 4 | A1 | 35 | 80 | B3 | 35 | 12 | 20 | 27 | ○ | 100 | ○ | 80 |
| 5 | A1 | 18 | 80 | B3 | 18 | 10 | 20 | 29 | ◎ | 60 | ◎ | 80 |
| 6 | A1 | 18 | 80 | B3 | 10 | 10 | 20 | 50 | ◎ | 60 | ◎ | 120 |
| 7 | A1 | 18 | 40 | B3 | 18 | 10 | 20 | 29 | ◎ | - | ◎ | 100 |
| | A2 | 18 | 40 | | | | | | | | | |
| 8 | A1 | 18 | 80 | B8 | 18 | 10 | 20 | 27 | ◎ | 60 | ○ | 120 |
| 9 | A3 | 18 | 80 | B9 | 18 | 10 | 20 | 34 | ◎ | 60 | ◎ | 120 |
| 10 | A1 | 18 | 80 | B4 | 18 | 10 | 20 | 25 | ◎ | 60 | ◎ | 120 |
| 11 | A1 | 18 | 80 | B5 | 18 | 10 | 20 | 24 | ◎ | 60 | ◎ | 120 |
| 12 | A1 | 18 | 80 | B6 | 18 | 10 | 20 | 24 | ◎ | 60 | ◎ | 120 |
| 13 | A1 | 18 | 80 | B7 | 18 | 10 | 20 | 25 | ◎ | 60 | ◎ | 80 |
| 14 | A3 | 18 | 80 | B4 | 18 | 10 | 20 | 28 | ◎ | 60 | ◎ | 120 |
| 15 | A3 | 18 | 80 | B5 | 18 | 10 | 20 | 27 | ◎ | 60 | ◎ | 120 |
| Comp. Ex. | | | | | | | | | | | | |
| 1 | A1 | 35 | 70 | B1 | 35 | 12 | 30 | 69 | × | 140 | ○ | 120 |
| 2 | A1 | 18 | 65 | B1 | 18 | 10 | 35 | 35 | × | 120 | ◎ | 120 |
| 3 | A3 | 18 | 65 | B1 | 18 | 10 | 35 | 45 | × | 120 | ◎ | 120 |

NOTE: Amounts used of the powder coating (A) and the powder coating (B) are expressed as parts by weight.

It can be seen from the results that the desired matte coating film was obtained without impairing hiding and finishing appearance in Examples 1 to 15 while lack of hiding of the coating film is generated even when matte effect is obtained in Comparative Examples 1 to 3. Especially, as in the case of Example 7, a matte coating film with a wide range of hues is obtained with a smaller number of powder coatings by combining two kinds of colored powder coatings having different hues. In addition, pinhole limit is improved in Examples 8 to 12, and a satisfactory matte effect is obtained even when coatings having a rapid curing rate were used as powder coating (A).

According to the powder coating composition of the present invention, an excellent effect that a matte coating film with a wide range of hues is obtained with a small number of powder coatings, whereas at least two kinds of coatings for every hue must be conventionally furnished. Furthermore, gloss can be controlled at a given level by adjustment of the amount of the powder coating (B). Specifically, in conventional techniques, it is necessary to prepare powder coatings of primary colors for every desired glossiness. Therefore, in the case where, for instance, a coating film having a desired hue is obtained by mixing two or more kinds of powder coatings of different primary colors, the powder coatings of primary colors must be prepared for every desired glossiness even when only gloss is changed. According to the present invention, however, a coating film having a desired gloss can be obtained freely without changing the number of powder coatings of primary colors, but only changing the amount of the powder coating (B) formulated. Furthermore, according to the matte powder coating composition of the present invention, a more high-quality matte coating film of which pinhole and lack of hiding are prevented can also be obtained.

## INDUSTRIAL APPLICABILITY

The matte powder coating composition of the present invention can be widely used for coating of steel furniture, electrical appliances, automobile parts and the like.

## Claims

1. A matte powder coating composition comprising a powder coating (A) comprising a resin, a curing agent and a colorant; and a powder coating (B) comprising a resin and a curing agent without containing a colorant, wherein the powder coating (B) has a gelation time of 1200 seconds or less, and the difference in the gelation time of the powder coating (B) and the powder coating (A) is 400 seconds or more.

2. The matte powder coating composition according to claim 1, wherein the powder coating (B) comprises at least one member selected from the group consisting of a β-hydroxyalkyl amide compound, a blocked isocyanate and a melamine compound as a curing agent.

3. The matte powder coating composition according to claim 1, wherein the powder coating (B) comprises a polyester or acrylic resin having a hydroxyl group as a resin, and a blocked isocyanate which is blocked with at least one blocking agent selected from the group consisting of methyl isobutyl ketone oxime, methyl ethyl ketone oxime, 1,2-pyrazole, 3,5-dimethylpyrazole, 1H-1,2,4-triazole, 1H-1,2,3-triazole, 1H-1,2,4-triazole-3-thiol and 1H-1,2,3-triazolo[4,5-b]pyridine as a curing agent.

4. The matte powder coating composition according to claim 1, wherein the powder coating (B) comprises a resin having a hydroxyl group or a resin having an epoxy group as a resin, and a compound having a carboxyl group and a blocked isocyanate as a curing agent.

5. The matte powder coating composition according to claim 4, wherein the powder coating (B) comprises a polyester as the resin having a hydroxyl group and an acrylic resin as the resin having an epoxy group.

6. The matte powder coating composition according to claim 4 or 5, wherein the compound having a carboxyl group comprises dodecanedicarboxylic acid and/or an acrylic resin having an acid value of 200 mg KOH/g or more.

7. The matte powder coating composition according to claim 5 or 6, wherein the acrylic resin having an epoxy group has a weight-average molecular weight of from 5,000 to 100,000 and an epoxy equivalence of from 250 to 600 g/mol.

8. The matte powder coating composition according to any one of claims 5 to 7, wherein the acrylic acid having an epoxy group has a hexane tolerance of from 3.0 to 8.5.

9. The matte powder coating composition according to any one of claims 4 to 8, wherein the blocked isocyanate comprises a blocked isocyanate which is blocked by ε-caprolactam.

10. The matte powder coating composition according to claim 9, wherein the blocked isocyanate which is blocked by ε-caprolactam is contained in an amount of 20% by weight or more of the total amount of the blocked isocyanate.

11. The matte powder coating composition according to any one of claims 4 to 10, wherein the blocked isocyanate is contained in an amount of from 15 to 60 parts by weight based on 100 parts by weight of a total amount of the resin having a hydroxyl group, the resin having an epoxy group and the compound having a carboxyl group.

12. The matte powder coating composition according to any one of claims 1 to 11, wherein the powder coating (A) comprises two or more kinds of color powder coatings having different hues.

13. The matte powder coating composition according to claim 12, wherein each of the differences in lightness of the two or more color powder coatings having different hues are within 30.

14. The matte powder coating composition according to any one of claims 1 to 13, wherein the powder coating (B) is contained in an amount of 30% by weight or less of the powder coating composition.

15. The matte powder coating composition according to any one of claims 1 to 14, wherein the powder coating (B) has an average particle size of 25 μm or less, and the difference in particle sizes of the powder coating (B) and the powder coating (A) is within ±15% the average particle size of the powder coating (B).

16. The matte powder coating composition according to any one of claims 1 to 15, wherein the powder coating (B) has a standard deviation of the particle size of 20 μm or less.

17. A process for preparing a matte powder coating composition comprising the step of mixing a powder coating (A) comprising a resin, a curing agent and a colorant, and a powder coating (B) comprising a resin and a curing agent without containing a colorant, wherein the powder coating (B) has a gelation time of 1200 seconds or less, and the difference in the gelation time of the powder coating (B) and the powder coating (A) is 400 seconds or more.

18. The process according to claim 17, wherein the powder coating (B) comprises at least one member selected from the group consisting of a β-hydroxyalkyl amide compound, a blocked isocyanate and a melamine compound as a curing agent.

19. The process according to claim 17, wherein the powder coating (B) comprises at least one member selected from the group consisting of a polyester or acrylic resin having a hydroxyl group as a resin, and a blocked isocyanate which is blocked with at least one blocking agent selected from the group consisting of methyl isobutyl ketone oxime, methyl ethyl ketone oxime, 1,2-pyrazole, 3,5-dimethylpyrazole, 1H-1,2,4-triazole, 1H-1,2,3-triazole, 1H-1,2,4-triazole-3-thiol and 1H-1,2,3-triazolo[4,5-b]pyridine as a curing agent.

20. The process according to claim 17, wherein the powder coating (B) comprises a resin having a hydroxyl group or a resin having an epoxy group as a resin, and a compound having a carboxyl group and a blocked isocyanate as a curing agent.

21. The process according to claim 20, wherein the powder coating (B) comprises a polyester as the resin having a hydroxyl group and an acrylic resin as the resin having an epoxy group.

22. The process according to claim 20 or 21, wherein the compound having a carboxyl group comprises dodecanedicarboxylic acid and/or an acrylic resin having an acid value of 200 mg KOH/g or more.

23. The process according to claim 21 or 22, wherein the acrylic resin having an epoxy group has a weight-average molecular weight of from 5,000 to 100,000 and an epoxy equivalence of from 250 to 600 g/mol.

24. The process according to any one of claims 21 to 23, wherein the acrylic acid having an epoxy group has a hexane tolerance of from 3.0 to 8.5.

25. The process according to any one of claims 20 to 24, wherein the blocked isocyanate comprises a blocked isocyanate which is blocked by ε-caprolactam.

**26.** The process according to claim 25, wherein the blocked isocyanate which is blocked by ε-caprolactam is contained in an amount of 20% by weight or more of the total amount of the blocked isocyanate.

**27.** The process according to any one of claims 20 to 26, wherein the blocked isocyanate is contained in an amount of from 15 to 60 parts by weight based on 100 parts by weight of a total amount of the resin having a hydroxyl group, the resin having an epoxy group and the compound having a carboxyl group.

**28.** The process according to any one of claims 17 to 27, wherein the powder coating (A) comprises two or more kinds of color powder coatings having different hues.

**29.** The process according to claim 28, wherein each of the differences in lightness of the two or more color powder coatings having different hues are within 30.

**30.** The process according to any one of claims 17 to 29, wherein the powder coating (B) is contained in an amount of 30% by weight or less of the powder coating composition.

**31.** The process according to any one of claims 17 to 30, wherein the powder coating (B) has an average particle size of 25 μm or less, and the difference in particle sizes of the powder coating (B) with the powder coating (A) is within ±15% the average particle size of the powder coating (B).

**32.** The matte powder coating composition according to any one of claims 17 to 31, wherein the powder coating (B) has a standard deviation of the particle size of 20 μm or less.

**33.** A method for forming a matte coating film **characterized by** applying the matte powder coating composition as defined in any one of claims 1 to 16.

## INTERNATIONAL SEARCH REPORT

International application No.
PCT/JP2004/003469

A. CLASSIFICATION OF SUBJECT MATTER
Int.Cl[7] C09D5/03, C09D133/00, C09D163/00, C09D167/00, C09D175/04, C09D201/00

According to International Patent Classification (IPC) or to both national classification and IPC

B. FIELDS SEARCHED

Minimum documentation searched (classification system followed by classification symbols)
Int.Cl[7] C09D1/00-C09D201/10

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2004 |

Electronic data base consulted during the international search (name of data base and, where practicable, search terms used)
WPI/L(QUESTEL)

C. DOCUMENTS CONSIDERED TO BE RELEVANT

| Category* | Citation of document, with indication, where appropriate, of the relevant passages | Relevant to claim No. |
|---|---|---|
| X<br>Y | JP 48-56735 A (Shell Internationale Research Maatschappij N.V.), 09 August, 1973 (09.08.73), Claims; page 4<br>& US 3842035 A & GB 1405096 A<br>& DE 2247779 A & FR 2156664 A1 | 1-12,14, 17-28,30,33<br>13,15-16,29, 31-32 |
| X<br>Y | JP 6-172680 A (Kansai Paint Co., Ltd.), 21 June, 1994 (21.06.94), Claims; Par. Nos. [0013], [0014], [0018], [0019]<br>(Family: none) | 1-12,14, 17-28,30,33<br>13,15-16,29, 31-32 |
| X<br>Y | JP 54-36339 A (Kansai Paint Co., Ltd.), 17 March, 1979 (17.03.79), Claims; page 2<br>(Family: none) | 1-12,14, 17-28,30,33<br>13,15-16,29, 31-32 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>14 June, 2004 (14.06.04) | Date of mailing of the international search report<br>06 July, 2004 (06.07.04) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/003469

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 11-293160 A (Mita Industrial Co., Inc.),<br>26 October, 1999 (26.10.99),<br>Claims; Par. No. [0078]<br>& US 6146145 A | 1-12,14,<br>17-28,30,33<br>13,15-16,<br>29,31-32 |
| X<br><br>Y | JP 11-335594 A (Sanyo Chemical Industries, Ltd.),<br>07 December, 1999 (07.12.99),<br>Claims; Par. Nos. [0017], [0024]<br>(Family: none) | 1-12,14,<br>17-28,30,33<br>13,15-16,<br>29,31-32 |
| X<br><br>Y | JP 2000-95974 A (Kao Corp.),<br>04 April, 2000 (04.04.00),<br>Claims<br>(Family: none) | 1-12,14,<br>17-28,30,33<br>13,15-16,<br>29,31-32 |
| Y | JP 54-86532 A (Mitsui Toatsu Chemicals, Inc.),<br>10 July, 1979 (10.07.79),<br>Claims<br>(Family: none) | 1-33 |
| Y | JP 2002-53810 A (Nippon Paint Co., Ltd.),<br>19 February, 2002 (19.02.02),<br>Claims; Par. Nos. [0017], [0029]<br>(Family: none) | 1-33 |
| Y | JP 2001-19906 A (Nippon Paint Co., Ltd.),<br>23 January, 2001 (23.01.01),<br>Claims<br>(Family: none) | 1-33 |
| Y | JP 10-72557 A (Kao Corp.),<br>17 March, 1998 (17.03.98),<br>Claims<br>(Family: none) | 1-33 |
| Y | JP 3-109468 A (Nippon Ester Kabushiki Kaisha),<br>09 May, 1991 (09.05.91),<br>Claims; page 2<br>& EP 504454 A1 & US 5229470 A | 1-33 |
| Y | JP 8-41384 A (Nippon Paint Co., Ltd.),<br>13 February, 1996 (13.02.96),<br>Claims; Par. Nos. [0017], [0029]<br>& EP 687714 A1 | 15-16,31-33 |
| Y | JP 11-302569 A (Nippon Paint Co., Ltd.),<br>02 November, 1999 (02.11.99),<br>& EP 950694 A1 & JP 11-302570 A<br>& US 2002-0103274 A1 & US 2003-0125422 A1 | 15-16,31-33 |

Form PCT/ISA/210 (continuation of second sheet) (January 2004)